# EUROPÄISCHE PATENTSCHRIFT

(11) **EP 1 726 669 B1**
(45) Veröffentlichungstag und Bekanntmachung des Hinweises auf die Patenterteilung: **01.09.2010**
(21) Anmeldenummer: 05011073.3
(22) Anmeldetag: 23.05.2005
(51) Int. Cl.: C22C 14/00

(54) **Titan-Legierung**
Titanium alloy
Alliage de titane

(43) Veröffentlichungstag der Anmeldung: 29.11.2006
(73) Patentinhaber: ThyssenKrupp VDM GmbH, 58791 Werdohl (DE); Volkswagen AG, 38440 Wolfsburg (DE)
(72) Erfinder: Sibum, Heinz Dr.-Ing., 45257 Essen (DE); Kiese, Jürgen Dr.-Ing., 03058 Gallinchen (DE); Kramer, Manfred, 38518 Gifhom (DE)

(56) Entgegenhaltungen:
- WO-A-02/058923
- US-A- 3 070 468
- US-A- 3 074 829
- PATENT ABSTRACTS OF JAPAN Bd. 2000, Nr. 21, 3. August 2001 (2001-08-03) -& JP 2001 089821 A (SUMITOMO METAL IND LTD), 3. April 2001 (2001-04-03)
- PATENT ABSTRACTS OF JAPAN Bd. 016, Nr. 349 (C-0967), 28. Juli 1992 (1992-07-28) -& JP 04 105659 A (SHINYA IWAMOTO), 7. April 1992 (1992-04-07)

## Beschreibung

Die Erfindung betrifft eine Verwendung einer Titan-Legierung für den Hochtemperatureinsatz.

Aufgrund ihres geringen Gewichts eignen sich Titanwerkstoffe insbesondere für die Herstellung von Komponenten für den Fahrzeugbau. Dem Einsatz von konventionellen Titanlegierungen im Bereich der Abgasanlage von Verbrennungsmotoren steht allerdings wesentlich die Tatsache entgegen, dass bei ihnen bei einer Erwärmung auf Temperaturen von mehr als 600 °C Bruchgefahr in Folge von Grobkornbildung besteht. Grobkornbildung stellt sich insbesondere dann ein, wenn das Titanmaterial längere Zeit einer hohen Betriebstemperatur ausgesetzt ist.

Es ist versucht worden, das Problem der Grobkornbildung zu mindern, indem Titan mit Fe oder Si legiert worden ist. Diese Elemente haben jeweils eine kornfeinende Wirkung. Ihr Nachteil besteht allerdings darin, dass mit zunehmenden Si- und Fe-Gehalten die Duktilität des Titanwerkstoffs so stark abnimmt, dass er nicht mehr wirtschaftlich umgeformt werden kann. Diese Eigenschaft der mit Fe- und Si- legierten Titanwerkstoffe erweist sich als besonders nachteilig, wenn daraus komplexer geformte Teile für die Abgasanlage einer Verbrennungskraftmaschine hergestellt werden sollen.

Eine andere Möglichkeit, die Gefahr der Versprödung durch Oxidation eines Titanwerkstoffs zu mindern, ist aus der DE 101 03 169 A1 bekannt. Gemäß dem in dieser Druckschrift beschriebenen Verfahren wird ein Titanblech durch Walzplattieren und Wärmebehandeln mit einer das Ti-Blech vor Oxidation schützenden Al-Deckschicht versehen. Allerdings kann die Al-Deckschicht die in Folge einer länger anhaltenden Hochtemperaturerwärmung eintretende Grobkornbildung in dem Ti-Grundwerkstoff nicht verhindern.

Neben dem voranstehend erläuterten Stand der Technik ist aus der US 3,070,468 ein Verfahren zur Herstellung von dispersionsgehärteten Ti-Legierungen bekannt, wobei die betreffenden Legierungen jeweils mindestens 80 % Ti sowie bis zu 5 % an Cer enthalten. Weiter können die bekannten Legierungen als Ti-Mo-Legierungen 10 - 20 % Mo, als Ti-Mn-Legierung 8 % Mn, als Ti-Cu-Legierung 2 % Cu und als Ti-Si-Legierung 2 % Si, Rest jeweils Ti, enthalten. Ein Hinweis darauf, dass eine entsprechend zusammengesetzte Ti-Legierung in Folge einer geringen Neigung zur Grobkornbildung bei hohen Temperaturen für Bauteile geeignet sein könnte, die bei 600 °C und mehr eingesetzt werden, ist dabei nicht gegeben.

Ausgehend von dem voranstehend erläuterten Stand der Technik bestand daher die Aufgabe der Erfindung darin, eine Titanlegierung zu nennen, die sich für die Herstellung von Bauteilen für eine Abgasanlage eines Verbrennungsmotors eignet, bei der Betriebstemperaturen von 600 °C und mehr erreicht werden, wobei die zu benennende Legierung auch unter Einwirkung von hohen Einsatztemperaturen nur eine geringe Neigung zur Versprödung in Folge von Grobkornbildung aufweisen soll.

Erfindungsgemäß ist diese Aufgabe dadurch gelöst worden, dass für die Herstellung von Bauteilen für eine Abgasanlage die in Anspruch 1 angegebene Legierung verwendet wird.

Eine erfindungsgemäß zusammengesetzte Titan-Legierung weist aufgrund der Anwesenheit von Seltenerdmetall eine besonders gute Hochtemperaturbeständigkeit auf. Die in der erfindungsgemäßen Ti-Legierung vorhandenen Seltenerdmetall-Gehalte führen dazu, dass der in der Titan-Legierung enthaltene Sauerstoff gebunden wird und sich daher bei einer Erwärmung eines aus dem erfindungsgemäßen Titanwerkstoff gefertigten Blechs oder Bauteils nicht mehr ungünstig auf die Duktilität des Werkstoffs auswirken kann.

Überraschend hat sich herausgestellt, dass in der erfindungsgemäß verwendeten Legierung enthaltenes Seltenerdmetall auch bei einer längeren Erwärmung in Hochtemperaturbereichen von 600 °C bis 1.000 °C das Kornwachstum wirkungsvoll unterdrückt. Aus diesem Grund sind erfindungsgemäße Titan-Legierungen hervorragend zur Herstellung von Bauteilen geeignet, die in ihrem praktischen Einsatz über eine lange Einsatzdauer hohen Temperaturen ausgesetzt sind. So lassen sich beispielsweise aus einer erfindungsgemäßen Titanlegierung gefertigte Bleche besonders gut zur Fertigung von Teilen für Abgasanlagen von leistungsfähigen Kraftfahrzeugen nutzen.

Ihre in Folge der erfindungsgemäßen Anwesenheit von Seltenerdmetallen erzielten Eigenschaften machen erfindungsgemäß verwendete Titanlegierungen besonders zur Herstellung von Bauelementen geeignet, die bei Temperaturen von mehr als 800 °C über eine Gesamteinsatzdauer von mindestens 50 Stunden eingesetzt werden. So lassen sich aus einer erfindungsgemäß verwendeten Legierung besonders hochwertige Teile einer Abgasanlage für Verbrennungsmotoren herstellen, die den sich in der Praxis stellenden Anforderungen sicher gewachsen sind.

In diesem Zusammenhang kann es zweckmäßig sein, erfindungsgemäß verwendeten Titanwerkstoff zum ergänzenden Schutz vor Oxidation beispielsweise nach dem Vorbild der aus der DE 101 03 169 A1 bekannten Vorgehensweise mit einer Aluminium oder einer anderen zu diesem Zweck geeigneten Deckschicht zu versehen. Insbesondere zusammen mit einer solchen Al-Deckschicht können für eine erfindungsgemäß verwendete Titan-Legierung auch nach längerer Einsatzdauer im Hochtemperaturbereich von mehr als 800 °C, insbesondere mehr als 950 °C, noch optimale Gebrauchseigenschaften garantiert werden.

Praxisversuche haben gezeigt, dass die Gehalte an Seltenerdmetall in einer erfindungsgemäß verwendeten Ti-Legierung dann optimal sind, wenn sie 0,5 -1,0 Gew.-% betragen. Als Seltenerdmetalle kommen dabei bevorzugt Cer und Lanthan jeweils alleine oder in Kombination zum Einsatz. Ebenso ist es möglich als Seltenerdmetall ein La- und/oder ein Ce-Mischmetall zu verwenden.

Sofern Eisen in einer erfindungsgemäß verwendeten Titan-Legierung enthalten ist, um die Ausbildung eines im Hinblick auf eine optimale Duktilität günstigen fein gekörnten Gefüges zu unterstützen, ist erfindungsgemäß der Fe-Gehalt auf maximal 2 Gew.-% beschränkt, um die mit der Zugabe von Fe ebenfalls eintretende Verfestigung so einzustellen, dass sich der Ti-Werkstoff auch bei niedrigen Temperaturen noch einwandfrei verformen lässt. Die kornfeinende Wirkung von Eisen tritt dabei dann ein, wenn der Fe-Gehalt mindestens 0,03 Gew.-% beträgt. Optimierte Wirkungen von Fe ergeben sich, wenn der Fe-Gehalt 0,03 - 0,3 Gew.-% beträgt.

Auch die Wirkung von Silizium kann in einer erfindungsgemäß verwendeten Ti-Legierung zur Kornfeinung genutzt werden, indem der Si-Gehalt mindestens 0,01 Gew.-% beträgt. Gleichzeitig ist der maximale Si-Gehalt auf 0,8 Gew.-% beschränkt, um eine übermäßige Abnahme der Duktilität des erfindungsgemäß verwendeten Werkstoffs sicher zu verhindern. Optimierte Einflüsse auf die Eigenschaften der erfindungsgemäß verwendeten Legierung weist Silizium dann auf, wenn es in Gehalten von 0,25 - 0,5 Gew.-% vorhanden ist.

Der Sauerstoffgehalt einer erfindungsgemäß verwendeten Ti-Legierung ist auf maximal 0,3 Gew.-% beschränkt, um sicherzustellen, dass der Sauerstoff-Gehalt im Zuge der Wärmebehandlung, die bei der Herstellung eines erfindungsgemäß verwendeten Verbundwerkstoffs nach dem Auftrag der Al-Deckschicht zur stoffschlüssigen Anbindung erforderlich ist, nicht eine im Hinblick auf die geforderte Duktilität kritische Obergrenze ansteigt. Praktische Versuche haben gezeigt, dass sich optimale Eigenschaften einer erfindungsgemäß verwendeten Ti-Legierung und eines unter Verwendung dieser Ti-Legierung erzeugten erfindungsgemäß verwendeten Verbundwerkstoffs einstellen, wenn der Sauerstoffgehalt der Ti-Legierung 0,03 - 0,25 Gew.-% beträgt.

Aluminium wirkt sich stabilisierend auf die α-Phase von Ti-Legierungen aus. Um jedoch eine unerwünschte Oxidation des Ti-Werkstoffs zu vermeiden, ist der Al-Gehalt einer erfindungsgemäß verwendeten Legierung auf maximal 1,0 Gew.-% beschränkt. Um die Wirkung von Aluminium und der anderen zur Gruppe der α-Phasen-stabilisierenden gehörenden Elemente Aluminium und Sauerstoff sicher zu nutzen, können in einer erfindungsgemäß verwendeten Ti-Legierung die Gehalte dieser Elemente mindestens 0,02 Gew.-%, bevorzugt mindestens 0,05 Gew.-% betragen.

Die zur Gruppe Mo, Ta, Nb, Zr, Mn, Cr, Co, Ni, Cu, V, Si, H gehörenden Elemente stabilisieren die β-Phase von Ti-Legierungen. Um diesen Effekt zu nutzen, sollte mindestens eines dieser Elemente in Gehalten von mindestens 0,03 - 2 Gew.-% vorhanden sein.

Nachfolgend wird die Erfindung anhand eines Ausführungsbeispiels näher erläutert.

Zunächst ist eine erfindungsgemäße Titanlegierung, die neben Titan und unvermeidbaren Verunreinigungen 0,4 Gew.-% Si, 0,2 Gew.-% Fe und 0,6 Gew.-% La enthielt, erschmolzen und zu einem Ti-Band mit einer 1,25 mm betragenden Dicke gewalzt worden.

Anschließend ist basierend auf der erfindungsgemäßen Ti-Legierung ein Verbundwerkstoff E erzeugt worden, indem zur Vermeidung einer Aufnahme von Sauerstoff entsprechend dem aus der DE 101 03 169 A1 bekannten Verfahren eine Al-Folie mit einer Dicke von 0,1 mm durch Walzplattieren als Deckschicht auf das als Grundschicht des Verbundwerkstoffs dienende Ti-Band aufgebracht worden ist. Die auf diese Weise auf dem Titan-Grundwerkstoff aufgebrachte Al-Deckschicht besaß nach dem Walzplattieren eine Dicke von 0,04 mm.

Nach dem Walzplattieren sind aus dem Verbundwerkstoff E Bauteile für die Abgasanlage eines in einem PKW eingesetzten Verbrennungsmotors geformt worden. Ohne einer gesonderten Wärmebehandlung unterzogen worden zu sein, sind die betreffenden Bauteile dann in das jeweilige Fahrzeug eingebaut worden. Die bei der ersten Inbetriebnahme entstehende Erwärmung der Abgasanlage führte anschließend dazu, dass sich im Übergangsbereich zwischen der Al-Deckschicht und der Ti-Grundschicht eine Titan-Aluminium-Mischoxidschicht bildete, durch die Deck- und Grundschicht stoffschlüssig und unlösbar miteinander verbunden waren.

Zum Vergleich wurde in derselben Weise ein Verbundwerkstoff V erzeugt, dessen Ti-Grundschicht neben Titan und unvermeidbaren Verunreinigungen 0,4 Gew.-% Si und 0,2 Gew.-% Fe aufwies.

In Tabelle 1 sind für den basierend auf einer erfindungsgemäßen Ti-Legierung erzeugten Verbundwerkstoff E und den zum Vergleich hergestellten Verbundwerkstoff V das E-Modul "E", die 0,2 % Dehngrenze "R_{p0,2}", die Zugfestigkeit "Rₘ" und die Dehnung "A" nach einem fünf Minuten und nach einem 100 Stunden dauernden Einsatz bei jeweils 800 °C angegeben.

**Tabelle 1**

| | Einsatzzeit | E | R_{p0,2} | Rₘ | A |
|---|---|---|---|---|---|
| | (T = 800 °C) | [GPa] | [MPa] | [MPa] | [%] |
| E | 5 min | 107,46 | 294,70 | 449,91 | 22,2 |
| E | 100 h | 106,31 | 319,90 | 428,66 | 25,4 |
| V | 5 min | 101,84 | 286,64 | 408,29 | 27,4 |
| V | 100 h | 110,04 | 318,51 | 415,42 | 21,6 |

Es zeigt, dass der unter Verwendung der erfindungsgemäßen Ti-Legierung hergestellte Verbundwerkstoff E auch nach der langen Einsatzdauer von 100 Stunden noch für seinen betriebssicheren Einsatz ausreichende Eigenschaften besitzt.

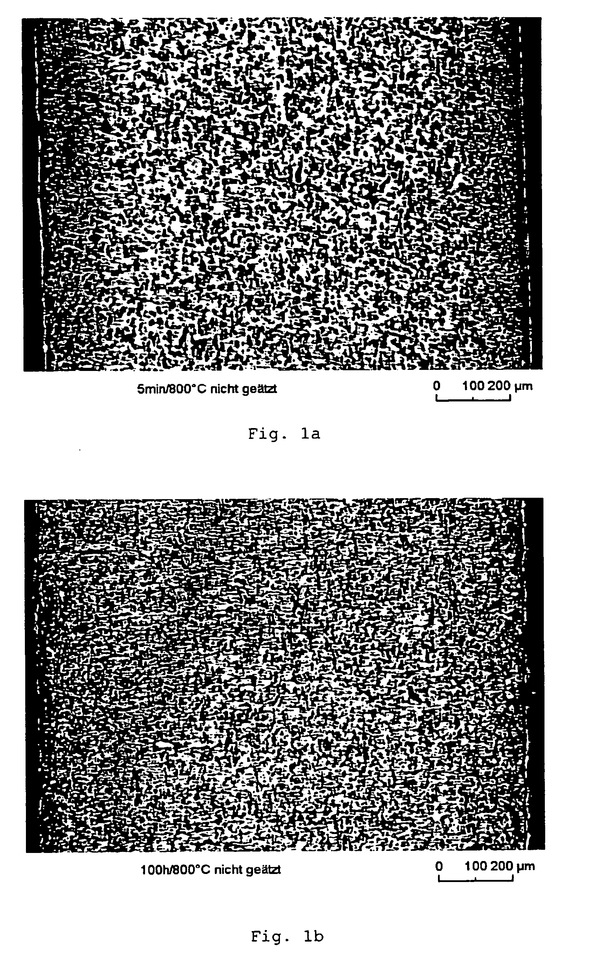

In Fig. 1a ist ein Schliffbild der erfindungsgemäß zusammengesetzten Ti-Grundschicht einer Blechprobe des Verbundwerkstoffs E nach dem 5 Minuten dauernden Einsatz bei 800 °C dargestellt. Die Probe weist ein deutlich feinkörniges Gefüge auf. In gleicher Weise ist in Fig. 1b ein Schliffbild der Ti-Grundschicht derselben Blechprobe des Verbundwerkstoffs nach dem 100 Stunden dauernden Einsatz bei 800 °C dargestellt. Diese Probe weist ein im Wesentlichen unverändert feinkörniges Gefüge auf.

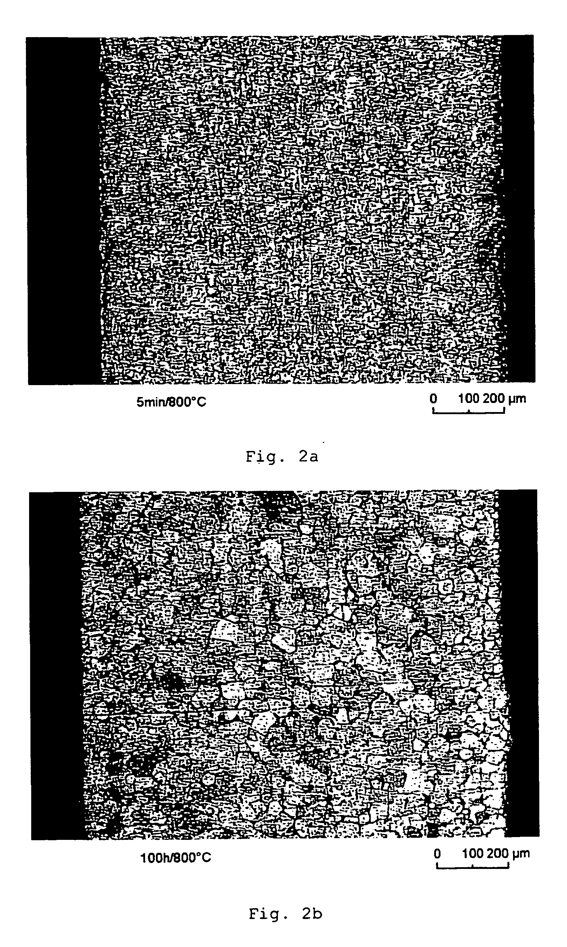

In Fig. 2a ist ein Schliffbild der Ti-Grundschicht einer Blechprobe des zum Vergleich angeführten Verbundwerkstoffs V nach dem 5 Minuten dauernden Einsatz bei 800 °C dargestellt. Die Probe weist ein Gefüge auf, das in Folge des Fehlens von Gehalten an Seltenerdmetall bereits gröber ist als das Gefüge der in Fig. 1a dargestellten Probe. Das in Fig. 2b dargestellte Schliffbild der Ti-Grundschicht derselben Blechprobe nach dem 100 Stunden dauernden Einsatz bei 800 °C zeigt demgegenüber eine deutliche Grobkornbildung die mit einer ebenso deutlichen Versprödung der Ti-Grundschicht des zum Vergleich gefertigten Verbundwerkstoffs V einhergeht.

## Patentansprüche

1. Verwendung einer Titan-Legierung mit folgender Zusammensetzung (in Gew.-%)
- Fe: ≤ 2 %,
- Si: 0,01 - 0,8 %,
- O: ≤ 0,3 %,
- C: ≤ 0,1 %,
- ein oder mehrere Elemente aus der Gruppe der Seltenerdmetalle in Gehalten, die in Summe 0,01 - 2 % betragen,
- sowie wahlweise
- ein oder mehrere Elemente aus der Gruppe Al, O in Gehalten, die in Summe maximal 1 % betragen;
- ein oder mehrere Elemente aus der Gruppe Mo, Ta, Nb, Zr, Mn, Cr, Co, Ni, Cu, V, Si, H in Gehalten, die in Summe maximal 3 % betragen,
- Rest Titan und unvermeidbare Verunreinigungen zur Herstellung von Bauteilen für Abgasanlagen von Verbrennungsmotoren.

2. Verwendung nach Anspruch 1, **dadurch gekennzeichnet, dass** ihr Fe-Gehalt mindestens 0,03 Gew.-% beträgt.

3. Verwendung nach Anspruch 2, **dadurch gekennzeichnet, dass** ihr Fe-Gehalt 0,03 - 0,3 Gew.-% beträgt.

4. Verwendung nach einem der voranstehenden Ansprüche, **dadurch gekennzeichnet, dass** ihr Si-Gehalt 0,25 - 0,5 Gew.-% beträgt.

5. Verwendung nach einem der voranstehenden Ansprüche, **dadurch gekennzeichnet, dass** ihr Sauerstoffgehalt mindestens 0,03 Gew.-% beträgt.

6. Verwendung nach Anspruch 5, **dadurch gekennzeichnet, dass** ihr Sauerstoffgehalt 0,03 - 0,25 Gew.-% beträgt.

7. Verwendung nach einem der voranstehenden Ansprüche, **dadurch gekennzeichnet, dass** ihr Gehalt an Seltenerdmetallen in Summe 0,5 - 1,0 Gew.-% beträgt.

8. Verwendung nach einem der voranstehenden Ansprüche, **dadurch gekennzeichnet, dass** sie als Seltenerdmetall La und/oder Ce enthält.

9. Verwendung nach einem der voranstehenden Ansprüche, **dadurch gekennzeichnet, dass** sie als Seltenerdmetall ein La- und/oder ein Ce-Mischmetall enthält.

10. Verwendung nach einem der voranstehenden Ansprüche, **dadurch gekennzeichnet, dass** sie 0,02 - 1,0 Gew.-%, insbesondere 0,02 - 0,3 Gew.-%, Al enthält.

11. Verwendung nach einem der voranstehenden Ansprüche, **dadurch gekennzeichnet, dass** sie ein oder mehrere Elemente der Gruppe A1, O in Gehalten von mindestens 0,05 Gew.-% enthält.

12. Verwendung nach einem der voranstehenden Ansprüche, **dadurch gekennzeichnet, dass** sie ein oder mehrere Elemente aus der Gruppe Mo, Ta, Nb, Zr, Mn, Cr, Co, Ni, Cu, V, Si, H in Gehalten von mindestens 0,03 Gew.-% enthält.

## Claims

1. A use of a titanium alloy comprising the following composition (in % by mass):
- Fe: ≤ 2 %
- Si: 0.01 - 0.8 %
- O: ≤ 0.3%
- C: ≤ 0.1%
- one or more elements belonging to the group of rare earth elements in contents that are in total comprised between 0.01 - 2 %,
- as well as optionally
o one or more elements of the group consisting of Al, O in contents that are in total maximum 1 %;
o one or more elements of the group consisting of Mo, Ta, Nb, Zr, Mn, Cr, Co, Ni, Cu, V, Si, H in contents that are in total maximum 3 %,
- the rest being titanium and unavoidable impurities, for the manufacture of components of exhaust gas installations of internal combustion engines.

2. A use according to claim 1, **characterized in that** the Fe content of the alloy is at least 0.03 % by mass.

3. A use according to claim 2, **characterized in that** the Fe content of the alloy is comprised between 0.03 and 0.3 % by mass.

4. A use according to one of the preceding claims, **characterized in that** the Si content of the alloy is comprised between 0.25 and 0.5 % by mass.

5. A use according to one of the preceding claims, **characterized in that** the oxygen content of the alloy is at least 0.03 % by mass.

6. A use according to claim 5, **characterized in that** the oxygen content of the alloy is comprised between 0.03 and 0.25 % by mass.

7. A use according to one of the preceding claims, **characterized in that** the rare-earth elements content of the alloy is in total comprised between 0.5 and 1.0 % by mass.

8. A use according to one of the preceding claims, **characterized in that** the alloy contains La and/or Ce as rare earth element.

9. A use according to one of the preceding claims, **characterized in that** the alloy contains a La and/or Ce composition metal as rare earth element.

10. A use according to one of the preceding claims, **characterized in that** the alloy contains 0.02 -1.0 % by mass, in particular 0.02 - 0.3 % by mass Al.

11. A use according to one of the preceding claims, **characterized in that** the alloy contains one or more elements of the group comprising Al, O in contents of at least 0.05 % by mass.

12. A use according to one of the preceding claims, **characterized in that** the alloy contains one or more elements of the group comprising Mo, Ta, Nb, Zr, Mn, Cr, Co, Ni, Cu, V, Si, H in contents of at least 0.03 % by mass.

## Revendications

1. Utilisation d'un alliage de titane ayant la composition suivante (en % en poids)
- Fe: ≤ 2 %
- Si:0.01 - 0.8%
- O : ≤ 0.3 %
- C : ≤ 0.1%.
- des teneurs en un ou plusieurs éléments du groupe comprenant des métaux des terres rares lesquelles sont au total comprises entre 0,01 et 2 %,
- ainsi que facultativement
o des teneurs en un ou plusieurs éléments du groupe comprenant Al, O lesquelles sont au total 1 % maximum ;
o des teneurs en un ou plusieurs éléments du groupe comprenant Mo, Ta, Nb, Zr, Mn, Cr, Co, Ni, Cu, V, Si, H lesquelles sont au total 3 % maximum ;
- le reste étant du titane et des impuretés inévitables, pour la fabrication des composants des installations de gaz d'échappement des moteurs à combustion interne.

2. Utilisation selon la revendication 1, **caractérisée en ce que** la teneur en Fe de l'alliage est au moins 0,03 % en poids.

3. Utilisation selon la revendication 2, **caractérisée en ce que** la teneur en Fe de l'alliage est comprise entre 0,03 et 0,3 % en poids.

4. Utilisation selon l'une des revendications précédentes, **caractérisée en ce que** la teneur en Si de l'alliage est comprise entre 0,25 et 0,5 % en poids.

5. Utilisation selon l'une des revendications précédentes, **caractérisée en ce que** la teneur en oxygène de l'alliage est au moins 0,03 % en poids.

6. Utilisation selon la revendication 5, **caractérisée en ce que** la teneur en oxygène de l'alliage est comprise entre 0,03 et 0,25 % en poids.

7. Utilisation selon l'une des revendications précédentes, **caractérisée en ce que** la teneur en métaux de terres rares de l'alliage est au total 0,5 - 1,0 % en poids.

8. Utilisation selon l'une des revendications précédentes, **caractérisée en ce que** l'alliage contient du La et/ou du Ce en tant que métal de terres rares.

9. Utilisation selon l'une des revendications précédentes, **caractérisée en ce que** l'alliage contient un mischmétal de La et/ou de Ce en tant que métal de terres rares.

10. Utilisation selon l'une des revendications précédentes, **caractérisée en ce que** l'alliage contient 0,02 - 1,0 % en poids, notamment 0,02 - 0,3 % en poids de Al.

11. Utilisation selon l'une des revendications précédentes, **caractérisée en ce que** l'alliage contient des teneurs d'au moins 0,05 % en poids en un ou plusieurs éléments du groupe comprenant Al, O.

12. Utilisation selon l'une des revendications précédentes, **caractérisée en ce que** l'alliage contient des teneurs d'au moins 0,03 % en poids en un ou plusieurs éléments du groupe comprenant Mo, Ta, Nb, Zr, Mn, Cr, Co, Ni, Cu, V, Si, H.
